# FASCICULE DE BREVET EUROPEEN

(11) **EP 2 339 123 B1**
(45) Date de publication et mention de la délivrance du brevet: **10.07.2013**
(21) Numéro de dépôt: 09180605.9
(22) Date de dépôt: 23.12.2009
(51) Int. Cl.: F01D 9/06, F01D 25/14, F02C 7/047, F01D 25/18, F02K 3/06, F01D 25/24, F28F 9/007, F28F 3/08, F28D 9/00, F28F 3/04, F02C 7/14, F02K 3/02, F02C 7/18

(54) **Paroi intérieure annulaire de la veine secondaire d'un turboréacteur et procédé d'assemblage d'une telle paroi**
Innere Seite des Mantels des Sekundärstromes eines Turbostrahltriebwerkes und Verfahren zur Montage eines solchen Mantels
Inner side of the annular bypass duct of a turbojet engine and method for assembling such an annular duct

(43) Date de publication de la demande: 29.06.2011
(73) Titulaire: Techspace Aero S.A., 4041 Herstal (Milmort) (BE)
(72) Inventeur: Bajusz, Denis, 4350 Remicourt (BE); Depaepe, David, 4000 Liege (BE); Derclaye, Alain, 4218 Couthuin (BE); Dupuy, Régis, 31200 Toulouse (FR)
(74) Mandataire: Lecomte, Didier

(56) Documents cités:
- EP-A1- 2 075 194
- EP-A2- 0 924 409
- EP-A2- 1 916 399
- EP-A2- 2 011 988
- FR-A1- 2 902 830

## Description

### Domaine technique

L'invention a trait au problème de refroidissement du circuit de lubrification d'une turbomachine à double flux, plus particulièrement à la mise en place d'un refroidisseur dans la veine secondaire d'une turbomachine à double flux en vue d'un refroidissement optimisé du circuit de lubrification.

### Technique antérieure

Différents éléments mécaniques ou électriques d'une turbomachine doivent être lubrifiés et/ou refroidis, comme par exemple certains roulements, certains réducteurs et les machines électriques. Pour ce faire, un circuit de lubrification est prévu. L'huile joue le rôle de lubrifiant et également de fluide caloporteur, ce qui nécessite le prévoir une évacuation de la chaleur ainsi récoltée. Les turboréacteurs actuels génèrent de plus en plus de calories notamment pour les raisons suivantes :

- chargement de plus en plus important des enceintes de paliers ;

- intégration de réducteurs de haute puissance, notamment dans les turbopropulseurs, les moteurs dits « open rotor » équipés d'une double soufflante non carénée ou encore dans les turboréacteurs classiques où l'on fait tourner la soufflante à une vitesse plus faible que le compresseur basse pression à des fins d'amélioration du rendement ;

- l'intégration de nouveaux équipements comme par exemple les démarreurs-générateurs (starter/generators) de haute puissance.

Pour ces raisons, les échangeurs carburant-huile (FCOC pour Fuel cooled Oil cooler) sont saturés et exigent un complément de puissance de refroidissement via des échangeurs air-huile (ACOC pour Air cooled Oil cooler). Diverses solutions sont disponibles pour assurer l'évacuation des calories de tels échangeurs comme, par exemple, l'utilisation d'une ou plusieurs écopes sur le carénage ce qui entraine un accroissement de la trainée ou le piquage de flux d'air moteur ce qui entraine une perturbation aérodynamique du flux du moteur et, partant, une baisse de rendement.

Afin de minimiser les perturbations aérodynamiques, des échangeurs de chaleur dits surfaciques sont développés. Ils remplacent une paroi en contact avec une circulation d'air afin de présenter une surface d'échange thermique entre le fluide caloporteur comme par exemple l'huile du circuit de lubrification et l'air (source froide).

Le document de brevet EP 2 075 194 A1 divulgue un turboréacteur double-flux avec un échangeur air-huile disposé sur la virole intérieure de la veine secondaire au niveau du bec de séparation, depuis le bord d'attaque jusqu'à proximité des aubages redresseurs du flux secondaire. Une série d'ailettes parallèles entre elles et perpendiculaires à la surface du bec s'étendent sur la surface de l'extrémité du bec de séparation. Selon un premier mode de réalisation, les canaux d'écoulement pour l'huile sont dans l'épaisseur de la paroi formant le bec, ce qui impose des contraintes de construction assez importantes. Selon un second mode de réalisation, les canaux sont constitués par l'espace délimité entre deux plaques d'un empilement de trois plaques comportant deux plaques parallèles et légèrement écartées entre lesquelles une troisième plaque ondulée est logée en étant reliée de façon étanche, par chaque ligne formant le sommet de toutes les ondulations. Cette structure du type sandwich bien que légère et résistante présente l'inconvénient d'être limitée en capacité d'échange thermique. De manière plus générale, la réalisation de l'échangeur surfacique selon cet enseignement impose des contraintes particulières au niveau de la réalisation de la paroi du bec de séparation. Le coût de production des parois est élevé et leur mise en place est contraignante. De plus, la capacité d'échange thermique est limitée compte tenu de la surface d'échange limitée jusqu'à une certaine distance en aval depuis le bord d'attaque. L'extension de la surface d'échange à une distance plus grande du bord d'attaque risquerait de poser des problèmes de stabilité mécanique due au surpoids imposé par l'échangeur.

Les échangeurs surfaciques, bien qu'optimisant l'impact aérodynamique, sont généralement plus complexes à fabriquer et à intégrer que les échangeurs dits compacts. Ils doivent en effet se conformer géométriquement à la surface qu'ils remplacent et ils représentent des charges supplémentaires (masses, dilatations thermiques, ...) pour la zone à laquelle ils s'intègrent.

Le document de brevet EP 1 916 399 A2 divulgue un turboréacteur double-flux avec un échangeur surfacique annulaire intégré dans la paroi externe de la veine secondaire. L'intégration de l'échangeur dans la paroi externe est a priori plus aisée que dans la paroi interne. Cet agencement présente cependant l'inconvénient majeur que l'échangeur de chaleur est sujet à détérioration par des objets extérieurs qui pénètrent dans le turboréacteur. En effet, le mouvement de rotation de la soufflante brise en petits éclats ces objets extérieurs, les petits éclats se trouvant alors entrainés par la force centrifuge en aval de la soufflante vers l'extérieur de la veine secondaire.

### Résumé de l'invention

L'invention a pour objet de proposer une solution à au moins un des problèmes sus mentionnés, plus particulièrement de proposer une intégration d'échangeur surfacique dans une paroi de la veine secondaire permettant une échange thermique important tout en perturbant le moins possible l'écoulement secondaire, et de montage aisé.

L'invention consiste en un dispositif de paroi ou de partie de paroi intérieure annulaire de la veine secondaire d'un turboréacteur double-flux comprenant un bec de séparation des flux primaire et secondaire et un carter intermédiaire, ladite paroi ou partie de paroi étant destinée à être située entre le bord d'attaque dudit bec de séparation et ledit carter intermédiaire; remarquable en ce qu'il comprend au moins un échangeur de chaleur air-huile surfacique formant un segment annulaire de ladite paroi ou partie de paroi ; et au moins un bras de soutien de ladite paroi ou partie de paroi destiné à être fixé au carter intermédiaire et s'étendant depuis le carter intermédiaire vers ledit bord d'attaque. Ces mesures procurent, entre autres, les avantages suivants :

- une grande capacité de refroidissement car exploitant une surface assez grande avec très peu de perturbation sur l'aérodynamique de la veine secondaire ;

- soutien d'un échangeur surfacique à l'aide d'une structure optimisée en terme de masse

- intégration optimale dans le bec de séparation comprenant un espace sinon vide et donc disponible pour les échangeurs de chaleur ;

- montage stable et rigide grâce à l'arrimage au carter intermédiaire ;

- montage aisé car modulaire et depuis l'extérieur.

Selon un mode avantageux de l'invention, le dispositif comprend une pluralité d'échangeurs de chaleur formant une série de segments annulaires de ladite paroi ou partie de paroi.

Selon un autre mode avantageux de l'invention, les échangeurs de chaleur sont configurés pour être disposés bout à bout de manière à former, préférentiellement intégralement, la surface annulaire, la paroi comprenant préférentiellement une pluralité de bras de soutien destinés à être disposées à proximité de chaque jonction de deux échangeurs de chaleur.

Selon un encore autre mode avantageux de l'invention, le dispositif comprend au moins un segment annulaire de ladite paroi ou partie de paroi sans échangeur de chaleur et destinée à être disposée adjacente à l'échangeur de chaleur ou à au moins un des échangeurs de chaleur. En fonction des besoins en refroidissement, il peut être avantageux de prévoir une paroi mixte, c'est-à-dire faite de segments de paroi simple et également d'échangeurs de chaleur.

Selon un encore autre mode avantageux de l'invention, le ou les échangeurs de chaleur surfaciques s'étendent depuis le carter intermédiaire vers ledit bord d'attaque. Cette mesure permet d'exploiter au mieux une grande partie de la surface disponible sur le bec de séparation. De plus, il est intéressant que le ou les échangeurs de chaleur viennent à proximité du carter intermédiaire afin d'avoir leurs masses le plus près possible dudit carter, et ce pour des raisons de rigidité mécanique.

Préférentiellement, le bord amont du ou des échangeurs de chaleur est à distance du bord d'attaque du bec de séparation.

Selon un encore autre mode avantageux de l'invention, le dispositif comprend, en outre, une virole, préférentiellement d'un seul tenant, formant le bord d'attaque du bec de séparation et destinée à être fixée à l'échangeur ou aux échangeurs de chaleur. Cette virole vient compléter l'assemblage et en augmente la rigidité.

Selon un encore autre mode avantageux de l'invention, le dispositif comprend des moyens de fixation de la virole formant le bord d'attaque avec le ou les échangeurs de chaleur et avec le ou les bras de soutien, ces moyens impliquant préférentiellement un vissage. La virole comprend préférentiellement une surface annulaire apte à venir en contact avec une surface correspondante des échangeurs de chaleur de manière à assurer une liaison rigide.

Selon un encore autre mode avantageux de l'invention, le dispositif comprend une pluralité de bras de soutien destinés à être disposés le long de la face interne de la surface annulaire de ladite paroi.

Selon un encore autre mode avantageux de l'invention, la ou les bras de soutien comprennent, chacun, une bride de fixation au carter intermédiaire, une partie allongée s'étendant depuis ladite bride et destinée soutenir le ou les échangeurs de chaleur, et des moyens de renfort reliant la bride à la partie allongée.

Selon un encore autre mode avantageux de l'invention, les moyens de renfort comprennent une nervure ajourée, présentant préférentiellement une structure du type treillis. Cette construction de la nervure permet d'en optimiser le rapport raideur/poids.

Selon un encore autre mode avantageux de l'invention, la ou au moins un des bras de soutien comprend un premier connecteur hydraulique apte à assurer une connexion hydraulique avec le ou un des échangeurs de chaleur, un deuxième connecteur hydraulique apte à assurer une connexion hydraulique avec le carter intermédiaire, une conduite reliant les premier et second connecteurs. Préférentiellement, ladite conduite est intégrée dans le bras de soutien.

Selon un encore autre mode avantageux de l'invention, le deuxième connecteur hydraulique est configuré et disposé sur le bras de soutien de telle manière qu'il puisse coopérer par engagement avec un connecteur correspondant du carter intermédiaire, directement lors de la mise en place et fixation du bras de soutien au carter intermédiaire.

Selon un encore autre mode avantageux de l'invention, le premier connecteur hydraulique est configuré et disposé sur le bras de soutien de telle manière qu'il puisse coopérer par engagement avec un connecteur correspondant de l'échangeur de chaleur adjacent, directement par un mouvement d'approche de l'échangeur vers le bras de soutien suivi par un mouvement de translation dans une direction correspondant à la direction amont de l'écoulement de fluide du turboréacteur en fonctionnement.

L'invention concerne également un turboréacteur comprenant un dispositif de paroi telle que définie ci-avant.

L'invention concerne également un procédé d'assemblage d'un dispositif de paroi telle que définie ci-avant sur un turboréacteur, plus particulièrement d'un dispositif comprenant, en outre, une virole, préférentiellement d'un seul tenant, formant le bord d'attaque du bec de séparation et destinée à être fixée à l'échangeur ou aux échangeurs de chaleur, le procédé comprenant les étapes suivantes :
1. mise en place du ou des bras de soutien et fixation au carter intermédiaire ;
2. mise en place du ou des échangeurs de chaleur sur le ou les bras de soutien de manière à former la surface annulaire de ladite paroi ;
3. mise en place de la virole sur la surface annulaire.

Ce procédé rend le montage particulièrement aisée, en particulier lorsque les conduites hydrauliques sont prévues sur le ou les bras de soutien.

### Brève description des dessins

La figure 1 est une vue générale en coupe d'un turboréacteur situant l'emplacement d'un dispositif de paroi équipée d'échangeurs air-huile, selon l'invention.

La figure 2 est une vue en coupe de la partie référencée 11 du turboréacteur de la figure 1 comprenant le dispositif de paroi équipé d'échangeurs air-huile, selon l'invention.

La figure 3 est une vue en coupe du dispositif de paroi selon l'invention.

La figure 4 est une vue en perspective depuis l'avant du turboréacteur d'une partie de paroi selon l'invention formée par un échangeur de chaleur surfacique supporté par deux bras de soutien et équipé d'une virole formant le bord d'attaque.

La figure 5 est une vue en perspective depuis l'arrière du turboréacteur de la partie de paroi de la figure 4.

La figure 6 est une vue en coupe de la première étape d'assemblage de la paroi.

La figure 7 est une vue en coupe de la deuxième étape d'assemblage de la paroi.

La figure 8 est une vue en coupe de la troisième étape d'assemblage de la paroi.

### Description des modes de réalisation

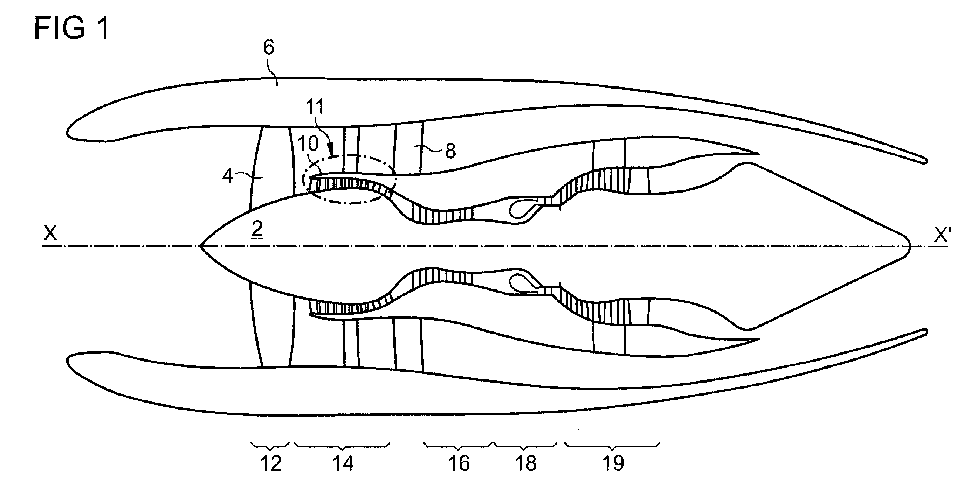

Un turboréacteur double-flux est illustré schématiquement en coupe à la figure 1. On peut y identifier les principaux éléments, à savoir la nacelle 6 servant d'enveloppe extérieure aux différents organes, le rotor 2 tournant autour de l'axe X-X' de la machine et la soufflante 4 supportée par le rotor 2.

Les termes « amont » et « aval » se rapportent à des positions axiales le long de l'axe X-X' dans le sens de l'écoulement du flux d'air traversant le turboréacteur.

Les termes « interne » ou « inférieur » et « externe » ou « extérieur » se rapportent à des positions radiales par rapport à l'axe X-X' de la turbomachine, « externe » ou « supérieur » signifiant une position plus éloignée de l'axe en question et, « interne » ou « inférieur » signifiant une position plus proche de l'axe.

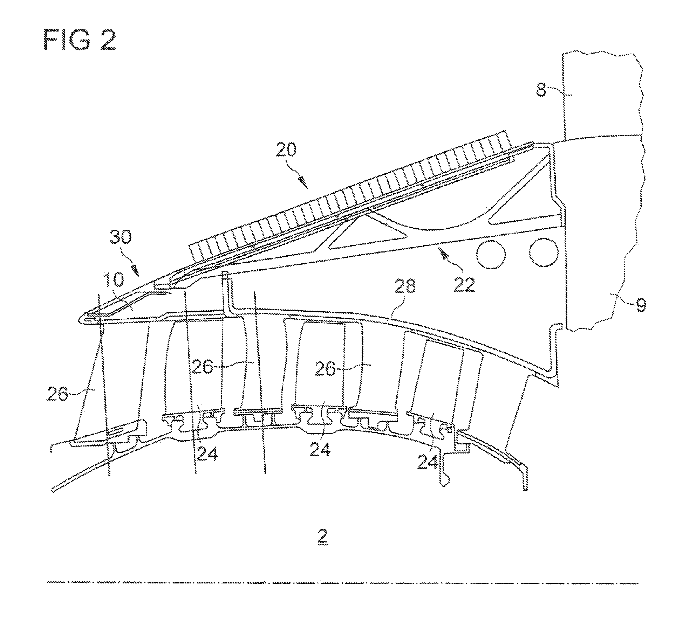

En aval de la soufflante 4, le flux d'air est séparé par le bec de séparation 10 en un flux d'air primaire et un flux d'air secondaire. Le flux d'air primaire parcourt un passage d'air annulaire interne ou veine primaire en pénétrant dans le compresseur basse pression. Le flux d'air secondaire est dévié par le bec de séparation 10 dans un passage d'air annulaire externe ou veine secondaire. Le turboréacteur comprend une série de groupes fonctionnels : la soufflante 12, le compresseur basse pression 14, le compresseur haute pression 16, la chambre de combustion 18 et la turbine 19. Des bras de maintien 8 assurent une liaison mécanique entre la nacelle et la partie centrale comprenant le rotor et les différents étages. Le bec de séparation comprend une paroi délimitant la partie interne ou intérieure de la veine secondaire. La partie de cette paroi identifiée par la référence 11 s'étendant depuis le bord d'attaque du bec de séparation jusqu'aux bras de maintien est illustrée plus en détails à la figure 2.

Des aubages redresseurs (non visibles) sont prévus à hauteur des bras de maintien 8 et répartis sur le pourtour de la paroi entre ces bras de maintien. De la sorte, la paroi interne référencée 11 délimitant la veine secondaire est libre d'aubages redresseurs.

La figure 2 est une vue en coupe du bec de séparation s'étendant depuis le bord d'attaque du bec de séparation jusqu'aux bras de maintien. Elle illustre également la partie du compresseur basse pression correspondante. Le bec de séparation 10 assure la séparation du flux d'air généré par la soufflante entre la veine primaire traversant le compresseur basse pression et la veine secondaire. La veine primaire est délimitée par l'enveloppe du rotor 2 et le carter 28. Les aubes mobiles ou rotoriques 24 sont supportées par le rotor 2 et les aubes fixes ou statoriques 26 sont supportées par le bec de séparation 10 et le carter 28. La partie de paroi du bec de séparation est constituée essentiellement d'un échangeur de chaleur surfacique air-huile 20, d'un bras de maintien 22 et d'une virole 30 formant le bord d'attaque. Le bras de soutien 22 est fixé au carter intermédiaire 9 qui est lui-même rigidement fixé à la nacelle par les bras de maintien 8. Le carter intermédiaire constitue donc une partie de la machine particulièrement robuste et rigide. Le bras de soutien s'étend depuis le carter intermédiaire 9 vers la virole 30 formant le bord d'attaque du bec de séparation. Il s'agit d'une structure généralement triangulaire supportant l'échangeur de chaleur 20. Ce dernier comprend une plaque formant la paroi et pourvue d'un ou plusieurs canaux d'huile à refroidir. La plaque est pourvue d'ailettes de refroidissement sur sa face extérieure. L'échangeur de chaleur est généralement courbé de manière à constituer un segment annulaire de la paroi. Alternativement, il peut comporter une série de facettes généralement planes ou légèrement courbées et formant un angle les unes par rapport aux autres de manière à former une forme généralement courbe.

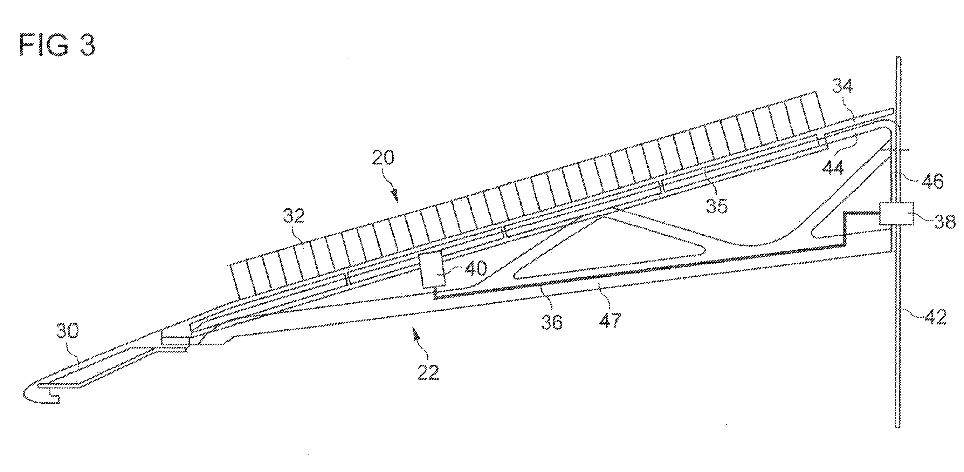

L'échangeur de chaleur 20, le bras de maintien 22 et la virole 30 formant le bord d'attaque de la figure 2 sont illustrés plus en détails à la figure 3. Le bras de maintien 22 est en matériau métallique, préférentiellement en titane. Il comprend une bride de fixation 46, une partie allongée et généralement plane 44 et une nervure 47 assurant une liaison rigide entre la bride 46 et la partie allongée 44. Cette nervure 47 est idéalement ajourée, préférentiellement à la manière d'un treillis afin d'en optimiser la raideur dans son plan général par rapport au poids de matière. La bride de fixation 46 est destinée à assurer une liaison par vissage avec le carter intermédiaire. Elle est illustrée à la figure 3 avec une forme plane pour des raisons de clarté d'exposé de l'invention. En réalité, elle peut prendre diverses formes plus complexes en fonction de la forme du carter intermédiaire. En tout état de cause, il lui faudra une surface d'appui sur le carter intermédiaire de manière à pouvoir assurer un maintien des échangeurs de chaleur notamment dans un plan généralement perpendiculaire à la surface de l'échangeur de chaleur et passant par l'axe du turboréacteur. La partie allongée 44 est destinée à recevoir la face arrière de l'échangeur de chaleur 20.

L'échangeur de chaleur 20 comprend une plaque 34 généralement courbe de manière à former un segment annulaire de paroi, la plaque 34 étant pourvue sur sa face extérieure d'ailettes 32. Ces ailettes sont des lamelles fines parallèles entre elles et orientées selon un angle par rapport à l'axe X-X'. Cet angle est typiquement compris entre 20° et 60°, préférentiellement entre 30° et 50°, de manière à ce que les ailettes soient généralement parallèles à la direction du flux d'air à cet endroit. Alternativement, les ailettes pourraient être parallèles à l'axe X-X'. La plaque 34 comprend sous les ailettes un ou plusieurs canaux parcourus par l'huile à refroidir. Ces canaux sont illustrés de manière très schématique par des ouvertures 35 dans l'épaisseur de la plaque 34 sous les ailettes. Différents agencements du ou des canaux sont possibles et dépendront de divers paramètres de dimensionnement de la paroi et de la puissance d'échange de l'échangeur de chaleur.

La virole 30 de bord d'attaque est fixée au bord amont de la plaque 34 de l'échangeur de chaleur 20 afin de compléter la paroi interne de la veine secondaire.

Il est à noter que l'échangeur de chaleur peut être réalisé de plusieurs manières. Préférentiellement il est constitué d'une première plaque supérieure comprenant les ailettes de refroidissement et d'une seconde plaque inférieure fixée à la première par soudage ou collage. Les canaux de circulation d'huile peuvent ainsi être aisément réalisés sur la face inférieure de la plaque supérieure et/ou sur la face supérieure de la plaque inférieure. Il est préférentiellement fait en aluminium.

Une canalisation d'alimentation principale 42 est prévue au niveau du carter intermédiaire. Cette canalisation fait partie du circuit de lubrification du turboréacteur et s'étend jusque dans la nacelle via un ou plusieurs bras de maintien du turboréacteur. Un connecteur 38 est prévu au niveau du carter intermédiaire afin de coopérer avec une conduite 36 embarquée sur le bras de soutien 22. Un connecteur 40 est prévu sur le bras de soutien, à proximité de la partie allongée destinée à recevoir l'échangeur de chaleur afin de coopérer avec un connecteur correspondant de l'échangeur.

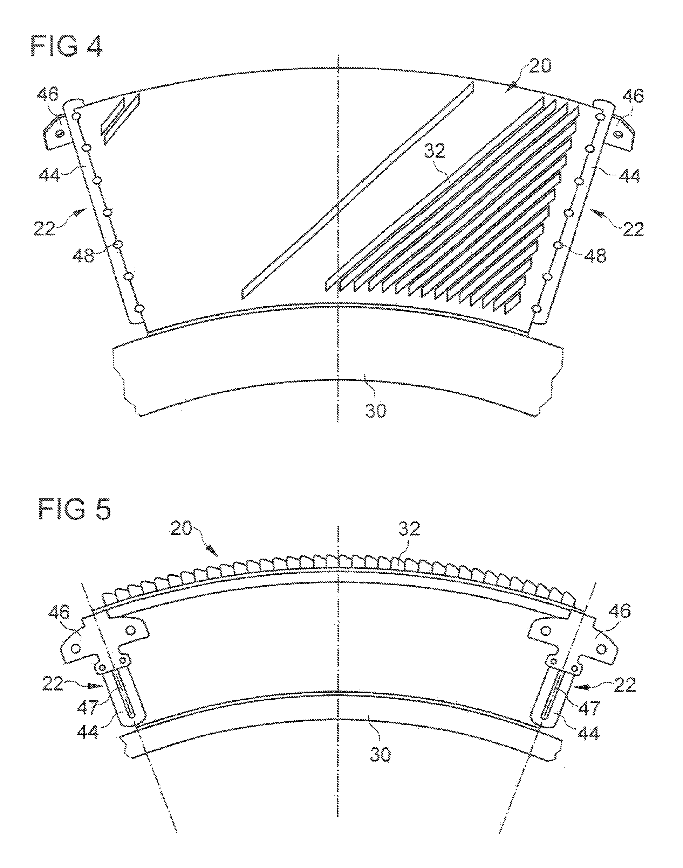

Les figures 4 et 5 sont des vues en perspective d'une partie de paroi interne de veine secondaire illustrant bien le développement annulaire de la paroi. La figure 4 est une vue en perspective de la paroi depuis une position extérieure et en amont (ou avant). La figure 5 est une vue en perspective de la paroi depuis une position extérieure et en aval (ou arrière). Ces deux vues illustrent une partie de la paroi formée par un échangeur de chaleur 20 supporté par deux bras de soutien 22, un à chaque bord latéral, et complétée par une virole de bord d'attaque. Chacun des bords latéraux de l'échangeur de chaleur est supporté sur une majeure partie de sa longueur (préférentiellement au moins 80%) par un bras de soutien 22. La plaque de l'échangeur de chaleur présente une épaisseur réduite aux bords latéraux ainsi qu'une série de demi trous 48 destinés à coopérer avec des demi trous correspondants d'un échangeur de chaleur adjacent et avec les trous 48 du bras de soutien, et ce via des moyens de vissage (non représentés). L'angle d'inclinaison des ailettes de refroidissement 32 par rapport à l'axe de la machine et mentionné précédemment est bien visible à la figure 4. Les brides de fixation 46 des bras de soutien 22 sont également bien visibles aux figures 4 et 5. La paroi annulaire est ainsi formée par une succession d'échangeurs de chaleur disposés successivement de manière sur des bras de soutien disposés de le long de la surface de la paroi. Préférentiellement les bords adjacents des plaques des échangeurs de chaleur sont jointifs. Un jeu est cependant préférentiellement prévu afin de pouvoir compenser les dilatations thermiques. Alternativement, une plaque intermédiaire peut être prévue entre deux bords adjacents. Il est également envisageable de prévoir les échangeurs de chaleur avec un des deux bords latéraux conçu pour recevoir le bord opposé de l'échangeur adjacent, comme par exemple un épaulement. Dans ce cas, la mise en place des différents échangeurs de chaleur doit se faire dans un sens déterminé. Les illustrations des figures 4 et 5 sont purement exemplatives et d'autres modes de réalisation sont possibles.

Il est également à noter que, en fonction des besoins en capacité de refroidissement, il peut ne pas être nécessaire de prévoir des échangeurs de chaleur sur tout le pourtour de la paroi interne de la veine secondaire. En effet, il est tout à fait possible de ne prévoir que certains des segments de la paroi sous forme d'échangeur de chaleur. Dans ce cas, les segments de paroi qui ne sont pas sous forme d'échangeur de chaleur, sont de construction sensiblement plus simple. L'invention montre ici son intérêt car elle permet une certaine liberté de dimensionnement tout en proposant une capacité d'échange de chaleur maximale élevée. La présence des bras de soutien est essentiellement dictée par le surpoids imposé par le ou les échangeurs de chaleur. Si la paroi ne présente que certaines sections pourvues d'échangeur de chaleur, le nombre de bras de soutien pourra alors éventuellement être réduit sur les zones de paroi simple par opposition aux zones avec échangeur de chaleur.

La figure 5 illustre bien le rôle de soutien des bras 22. On peut y observer la partie allongée généralement plane 44 et étroite et la nervure 47 reliant cette partie à la bride 46, avec une forme généralement triangulaire.

Comme mentionné précédemment, la partie de paroi s'étendant depuis le bord d'attaque du bec jusqu'au bord amont de la plaque de l'échangeur de chaleur est formée préférentiellement par une virole unitaire, c'est-à-dire d'un seul tenant. Cette virole 30 est ainsi mise en place après que la partie de paroi formée par les plaques adjacentes soit complètement formée par assemblage des plaques et des bras de soutien. La virole 30 est alors fixée à la paroi et termine l'assemblage en le rigidifiant notamment par rapport aux flexions dans des plans comprenant l'axe X-X' ou des plans parallèles. La virole 30 est préférentiellement faite en matériau métallique, notamment en aluminium afin de limiter voire annuler les problèmes de givrage à proximité du bord d'attaque.

Les illustrations aux figures 4 et 5 ne montrent pas les connexions hydrauliques pour des raisons de clarté d'exposé.

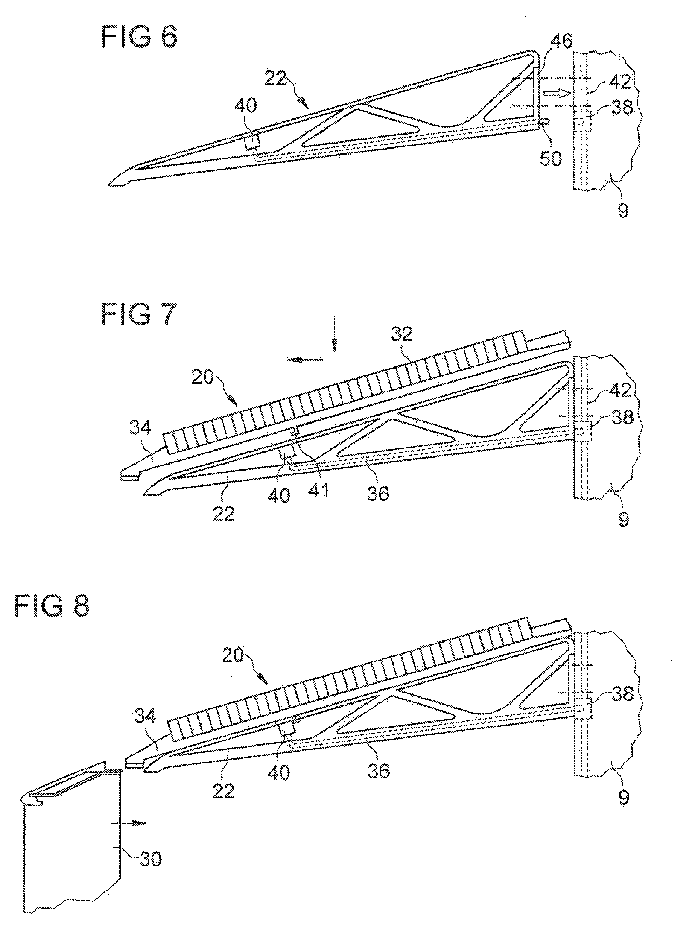

Les différentes étapes principales d'assemblage ou montage de la paroi sont illustrées aux figures 6, 7 et 8.

La figure 6 illustre le montage d'un bras de soutien 22 au carter intermédiaire. Le bras 22 de soutien comprend au moins une canalisation hydraulique reliant un premier connecteur 40 disposé à proximité de la surface de contact de la partie allongée du bras, avec un deuxième connecteur 50 disposé au niveau de la bride 46. Le premier connecteur hydraulique 40 est apte à coopérer avec un connecteur correspondant par un mouvement de translation généralement parallèle au plan de la surface de contact de la partie allongée du bras et destinée à recevoir l'échangeur de chaleur. Le deuxième connecteur est conçu et disposé sur ou à proximité de la bride de manière à pouvoir coopérer avec un connecteur correspondant 38 sur le carter intermédiaire 9 directement par un mouvement de translation selon une direction généralement perpendiculaire à la bride ou au plan général de la bride. Le connecteur 38 du carter intermédiaire est relié à une canalisation principale 42 du carter intermédiaire 9. De la sorte, le montage du bras de soutien 22 permet de manière très simple d'assurer en même temps une liaison hydraulique entre le connecteur 40 du bras avec la canalisation principale 42. La fixation de la bride 46 sur le carter intermédiaire se fait préférentiellement par vissage. Tout autre moyen de fixation connu de l'homme de l'art peut être envisagé, en alternative ou en complément.

La figure 7 illustre la mise en place de l'échangeur de chaleur. Ce dernier est soumis à un mouvement d'approche de manière à ce qu'il soit généralement parallèle aux surfaces de réception des bras de soutien. La figure ne montre qu'un seul bras de soutien ; le montage d'un échangeur de chaleur ou d'une plaque formant simple paroi se fait préférentiellement sur deux bras de soutien disposés à distance l'un de l'autre de manière à assurer un soutien de l'élément de paroi au niveau de ses deux bords latéraux. L'échangeur de chaleur est ensuite descendu sur les deux bras de soutien dans une position légèrement décalée en aval par rapport à la position finale de sorte que son connecteur hydraulique 41 soit disposé en face du connecteur hydraulique 40 du bras de soutien correspondant. L'échangeur de chaleur est ensuite déplacé vers l'avant (c'est-à-dire dans une direction amont) de sorte à faire coopérer les connecteurs hydrauliques 41 et 40. L'échangeur de chaleur peut ensuite être arrimé à au moins un des deux bras de soutien par des moyens de vissage. Préférentiellement le côté libre n'est pas fixé au bras afin de pouvoir mettre en place l'échangeur ou segment de paroi suivant.

Lorsque l'assemblage de la paroi annulaire constituée des échangeurs de chaleur et éventuellement de segments de paroi simple est terminée, la virole formant le bord d'attaque est ensuite mise en place par un simple mouvement d'approche en translation selon l'axe de la machine dans le sens aval de manière à épouser les bords amont ou avant des échangeurs de chaleur et éventuellement des segments de paroi simple. La solidarisation de la virole aux échangeurs de chaleur et éventuellement aux segments de paroi se fait préférentiellement par vissage. En fonction du dimensionnement des différents éléments constitutifs de cette paroi, cette liaison peut également se faire avec l'extrémité des bras de soutien.

## Revendications

1. Dispositif de paroi ou de partie de paroi intérieure annulaire de la veine secondaire d'un turboréacteur double-flux comprenant un bec de séparation (10) des flux primaire et secondaire et un carter intermédiaire (9), ladite paroi ou partie de paroi étant destiné à être situé entre le bord d'attaque dudit bec de séparation (10) et ledit carter intermédiaire (9) ;
**caractérisée en ce qu'**il comprend
au moins un échangeur de chaleur air-huile surfacique (20) formant un segment annulaire de ladite paroi ou partie de paroi ; et
au moins un bras de soutien (22) de ladite paroi ou partie de paroi destiné à être fixé au carter intermédiaire (9) et s'étendant depuis le carter intermédiaire (9) vers ledit bord d'attaque.

2. Dispositif selon la revendication précédente, **caractérisée en ce qu'**il comprend une pluralité d'échangeurs de chaleur (22) formant une série de segments annulaires de ladite paroi ou partie de paroi.

3. Dispositif selon la revendication précédente, **caractérisée en ce que** les échangeurs de chaleur (20) sont configurés pour être disposés bout à bout de manière à former, préférentiellement intégralement, la surface annulaire, le dispositif comprenant préférentiellement une pluralité de bras de soutien (22) destinés à être disposées à proximité de chaque jonction de deux échangeurs de chaleur.

4. Dispositif selon l'une des revendications précédentes, **caractérisée en ce qu'**il comprend au moins un segment annulaire de ladite paroi ou partie de paroi sans échangeur de chaleur et destinée à être disposée adjacente à l'échangeur de chaleur ou à au moins un des échangeurs de chaleur.

5. Dispositif selon l'une des revendications précédentes, **caractérisée en ce que** le ou les échangeurs de chaleur (20) s'étendent depuis le carter intermédiaire (9) vers ledit bord d'attaque.

6. Dispositif selon l'une des revendications précédentes, **caractérisée en ce qu'**il comprend, en outre, une virole (30), préférentiellement d'un seul tenant, formant le bord d'attaque du bec de séparation (10) et destinée à être fixée à l'échangeur ou aux échangeurs de chaleur (20).

7. Dispositif selon la revendication précédente, **caractérisée en ce qu'**il comprend des moyens de fixation de la virole (30) formant le bord d'attaque avec le ou les échangeurs de chaleur (20) et avec le ou les bras de soutien (22), ces moyens impliquant préférentiellement un vissage.

8. Dispositif selon l'une des revendications précédentes, **caractérisée en ce qu'**il comprend une pluralité de bras de soutien (22) destinées à être disposées le long de la face interne de la surface annulaire de ladite paroi.

9. Dispositif selon l'une des revendications précédentes, **caractérisée en ce que** le ou les bras de soutien (22) comprennent, chacun, une bride de fixation (46) au carter intermédiaire (9), une partie allongée (44) s'étendant depuis ladite bride et destinée soutenir le ou les échangeurs de chaleur, et des moyens de renfort (47) reliant la bride à la partie allongée.

10. Dispositif selon la revendication précédente, **caractérisée en ce que** les moyens de renfort comprennent une nervure ajourée (47), présentant préférentiellement une structure du type treillis.

11. Dispositif selon l'une des revendications précédentes, **caractérisée en ce que** le ou au moins un des bras de soutien (22) comprend un premier connecteur hydraulique (40) apte à assurer une connexion hydraulique avec le ou un des échangeurs de chaleur (20), un deuxième connecteur hydraulique (50) apte à assurer une connexion hydraulique avec le carter intermédiaire (9), une conduite (36) reliant les premier et second connecteurs.

12. Dispositif selon la revendication précédente, **caractérisée en ce que** le deuxième connecteur hydraulique (50) est configuré et disposé sur le bras de soutien (22) de telle manière qu'il puisse coopérer par engagement avec un connecteur correspondant (38) du carter intermédiaire (9), directement lors de la mise en place et fixation du bras de soutien (22) au carter intermédiaire (9).

13. Dispositif selon l'une des revendications précédentes, **caractérisée en ce que** le premier connecteur hydraulique (40) est configuré et disposé sur le bras de soutien (22) de telle manière qu'il puisse coopérer par engagement avec un connecteur correspondant (41) de l'échangeur de chaleur adjacent (20), directement par un mouvement d'approche de l'échangeur de chaleur vers le bras de soutien (22) suivi par un mouvement de translation dans une direction correspondant à la direction amont de l'écoulement de fluide du turboréacteur en fonctionnement.

14. Turboréacteur comprenant un dispositif de paroi selon l'une des revendications précédentes.

15. Procédé d'assemblage d'un dispositif de paroi selon la revendication 6 sur un turboréacteur, comprenant les étapes suivantes :
1. mise en place du ou des bras de soutien (22) et fixation au carter intermédiaire (9) ;
2. mise en place du ou des échangeurs de chaleur (20) sur le ou les bras de soutien (22) de manière à former la surface annulaire de ladite paroi ;
3. mise en place de la virole (30) sur la surface annulaire.

## Patentansprüche

1. Anordnung einer ringförmigen inneren Wand bzw. Wandteils des sekundären Strömungswegs eines Nebenstrom-Turbostrahltriebwerks, umfassend eine Nase (10) zum Trennen der primären und sekundären Ströme und ein Zwischengehäuse (9), wobei die Wand bzw. das Wandteil dazu gestaltet ist, sich zwischen der Anströmkante der Trennnase (10) und des Zwischengehäuses (9) zu befinden;
**dadurch gekennzeichnet, dass** sie
mindestens einen Oberflächen-Luft-Öl-Wärmetauscher (20), der ein ringförmiges Segment besagter Wand bzw. besagten Wandteils bildet, umfasst; und
mindestens einen Stützarm (22) der Wand bzw. des Wandteils, der zur Befestigung an dem Zwischengehäuse (9) eingerichtet ist und sich von dem Zwischengehäuse (9) zu der Anströmkante erstreckt.

2. Anordnung nach dem vorgenannten Anspruch, **dadurch gekennzeichnet, dass** sie eine Vielzahl von Wärmetauschern (22) umfasst, die eine Serie ringförmiger Segmente der Wand bzw. des Wandteils bilden.

3. Anordnung nach dem vorgenannten Anspruch, **dadurch gekennzeichnet, dass** die Wärmetauscher (20) zur Anordnung Ende an Ende gestaltet sind, sodass sie, bevorzugt integral, die ringförmige Oberfläche bilden, wobei die Vorrichtung bevorzugt eine Vielzahl von Stützarmen (22) umfasst, die dazu eingerichtet sind, in der Nähe jeder Anschlussstelle von zwei Wärmetauschern angeordnet zu werden.

4. Anordnung nach einem der vorgenannten Ansprüche, **dadurch gekennzeichnet, dass** sie mindestens ein ringförmiges Segment der Wand bzw. des Wandteils ohne Wärmetauscher umfasst und dazu eingerichtet ist, benachbart zu dem Wärmetauscher oder zu mindestens einem der Wärmetauscher angeordnet zu werden.

5. Anordnung nach einem der vorgenannten Ansprüche, **dadurch gekennzeichnet, dass** der bzw. die Wärmetauscher (20) sich von dem Zwischengehäuse (9) zu der Anströmkante erstrecken.

6. Anordnung nach einem der vorgenannten Ansprüche, **dadurch gekennzeichnet, dass** sie weiter eine Hülse (30), bevorzugt einstückig gefertigt, umfasst, welche die Anströmkante der Trennnase (10) bildet und dazu eingerichtet ist, an dem Wärmetauscher bzw. den Wärmetauschern (20) befestigt zu werden.

7. Anordnung nach dem vorgenannten Anspruch, **dadurch gekennzeichnet, dass** sie Mittel zum Befestigen der die Anströmkante bildenden Hülse (30) an dem Wärmetauscher bzw. den Wärmetauschern (20) und an dem Stützarm bzw. den Stützarmen (22) umfasst, wobei diese Mittel bevorzugt eine Verschraubung umfassen.

8. Anordnung nach einem der vorgenannten Ansprüche, **dadurch gekennzeichnet, dass** sie eine Vielzahl von Stützarmen (22) umfasst, die dazu eingerichtet sind, entlang der Innenseite der ringförmigen Oberfläche der Wand angeordnet zu werden.

9. Anordnung nach einem der vorgenannten Ansprüche, **dadurch gekennzeichnet, dass** der Stützarm bzw. die Stützarme (22) jeder einen Befestigungsflansch (46) zur Befestigung an dem Zwischengehäuse (9) umfassen, einen länglichen Teil (44), der sich von dem Flansch erstreckt und dazu eingerichtet ist, den bzw. die Wärmetauscher zu stützen, und Verstärkungsmittel (47), die den Flansch mit dem länglichen Teil verbinden.

10. Anordnung nach dem vorgenannten Anspruch, **dadurch gekennzeichnet, dass** die Verstärkungsmittel eine perforierte Rippe (47) umfassen, die bevorzugt eine gitterartige Struktur aufweist.

11. Anordnung nach einem der vorgenannten Ansprüche, **dadurch gekennzeichnet, dass** der Stützarm (22) oder mindestens einer der Stützarme (22) ein erstes hydraulisches Verbindungselement (40) umfasst, das dazu eingerichtet ist, eine Hydraulikverbindung mit dem bzw. einem der Wärmetauscher (20) sicherzustellen, ein zweites hydraulisches Verbindungselement (50), das dazu eingerichtet ist, eine Hydraulikverbindung mit dem Zwischengehäuse (9) sicherzustellen, eine Leitung (36), die das erste und zweite Verbindungselement verbindet.

12. Anordnung nach dem vorgenannten Anspruch, **dadurch gekennzeichnet, dass** das zweite hydraulische Verbindungselement (50) so gestaltet und auf dem Stützarm (22) angeordnet ist, dass es fähig ist, durch Eingriff mit einem entsprechenden Verbindungselement (38) des Zwischengehäuses (9) zusammenzuwirken, direkt während des Platzierens und Befestigens des Stützarms (22) an dem Zwischengehäuse (9).

13. Anordnung nach einem der vorgenannten Ansprüche, **dadurch gekennzeichnet, dass** das erste hydraulische Verbindungselement (40) so gestaltet und an dem Stützarm (22) angeordnet ist, dass es fähig ist, durch Eingriff mit einem entsprechenden Verbindungselement (41) des benachbarten Wärmetauschers (20) zusammenzuwirken, direkt durch eine Annäherungsbewegung des Wärmetauschers hin zu dem Stützarm (22), gefolgt von einer Translationsbewegung in einer Richtung entsprechend der Stromaufwärtsrichtung der Fluidströmung des in Betrieb befindlichen Turbostrahltriebwerks.

14. Turbostrahltriebwerk, umfassend eine Vorrichtung nach einem der vorgenannten Ansprüche.

15. Verfahren zur Montage einer Anordnung nach Anspruch 6 an einem Turbostrahltriebwerk, umfassend die folgenden Schritte:
- Platzieren des Stützarms bzw. der Stützarme (22) und Befestigung an dem Zwischengehäuse (9);
- Platzieren des bzw. der Wärmetauscher (20) auf dem Stützarm bzw. - armen (22), um die ringförmige Oberfläche der Wand zu bilden;
- Platzieren der Hülse (30) auf der ringförmigen Oberfläche.

## Claims

1. Assembly of annular inner annular wall or wall portion of the secondary flow path of a bypass turbojet engine comprising a nose (10) for separating the primary and secondary flows and an intermediate casing (9), said wall or wall portion being configured to be situated between the leading edge of said separator nose (10) and said intermediate casing (9);
**characterized in that** it comprises
at least one surface air-oil heat exchanger (20) forming an annular segment of said wall or wall portion; and
at least one support arm (22) of said wall or wall portion adapted to be fixed to the intermediate casing (9) and extending from the intermediate casing (9) toward said leading edge.

2. Assembly according to the previous claim, **characterized in that** it comprises a plurality of heat exchangers (22) forming a series of annular segments of said wall or wall portion.

3. Assembly according to the previous claim, **characterized in that** the heat exchangers (20) are configured so as to be arranged end-to-end so as to form, preferably integrally, the annular surface, the device preferably comprising a plurality of support arms (22) adapted to be arranged in the vicinity of each junction of two heat exchangers.

4. Assembly according to one of the previous claims, **characterized in that** it comprises at least one annular segment of said wall or wall portion without heat exchanger and adapted to be arranged adjacent to the heat exchanger or to at least one of the heat exchangers.

5. Assembly according to one of the previous claims, **characterized in that** the heat exchanger or exchangers (20) extend from the intermediate casing (9) toward said leading edge.

6. Assembly according to one of the previous claims, **characterized in that** it further comprises a shroud (30), preferably made in one piece, forming the leading edge of the separator nose (10) and adapted to be fixed to the heat exchanger or exchangers (20).

7. Assembly according to the previous claim, **characterized in that** it comprises means for attaching the shroud (30) forming the leading edge with the heat exchanger or exchangers (20) and with the support arm or arms (22), these means involving, preferably, a screwing.

8. Assembly according to one of the previous claims, **characterized in that** it comprises a plurality of support arms (22) adapted to be arranged along the inner side of the annular surface of said wall.

9. Assembly according to one of the previous claims, **characterized in that** the support arm or arms (22) each comprise an attachment flange (46) to the intermediate casing (9), an elongated portion (44) extending from said flange and adapted to support the heat exchanger or exchangers, and reinforcement means (47) connecting the flange to the elongated portion.

10. Assembly according to the previous claim, **characterized in that** the reinforcement means comprise a perforated rib (47) having, preferably, a trellis-type of structure.

11. Assembly according to one of the previous claims, **characterized in that** the support arm (22) or at least one of the support arms (22) comprises a first hydraulic connector (40) adapted to ensure a hydraulic connection with the or one of the heat exchangers (20), a second hydraulic connector (50) adapted to ensure a hydraulic connection with the intermediate casing (9), a duct (36) connecting the first and second connectors.

12. Assembly according to the previous claim, **characterized in that** the second hydraulic connector (50) is configured and arranged on the support arm (22) so as to be able to cooperate by engagement with a corresponding connector (38) of the intermediate casing (9), directly during the setting in place and attaching of the support arm (22) to the intermediate casing (9).

13. Assembly according to one of the previous claims, **characterized in that**, the first hydraulic connector (40) is configured and arranged on the support arm (22) so as to be able to cooperate by engagement with a corresponding connector (41) of the adjacent heat exchanger (20), directly by an approach motion of the heat exchanger toward the support arm (22) followed by a translational movement in a direction corresponding to the upstream direction of the fluid flow of the operating turbojet engine.

14. Turbojet engine comprising a device according to one of the previous claims.

15. Method for assembling an assembly according to claim 6 on a turbojet engine, comprising the following steps:
1. setting in place the support arm or arms (22) and attachment to the intermediate casing (9);
2. setting in place the heat exchanger or exchangers (20) on the support arm or arms (22) so as to form the annular surface of said wall;
3. setting in place the shroud (30) on the annular surface.
